# EUROPEAN PATENT SPECIFICATION

(11) **EP 2 168 838 B1**
(45) Date of publication and mention of the grant of the patent: **18.04.2012**
(21) Application number: 09250431.5
(22) Date of filing: 19.02.2009
(51) Int. Cl.: B61D 15/06, B61D 17/06, B60R 19/34, B62D 21/15, F16F 7/12

(54) **Railway vehicle having a shock absorbing device**
Schienenfahrzeug mit Stoßverzehrvorrichtung
Véhicule ferroviaire doté d'un dispositif amortissement de choc

(30) Priority: 30.09.2008 JP 2008253946
(43) Date of publication of application: 31.03.2010
(73) Proprietor: Hitachi Ltd., Chiyoda-ku Tokyo 100-8280 (JP)
(72) Inventor: Kawasaki, Takeshi, Tokyo 100-8220 (JP); Yamaguchi, Takashi, Tokyo 100-8220 (JP); Nakamura, Hideyuki, Tokyo 100-8220 (JP)
(74) Representative: Paget, Hugh Charles Edward

(56) References cited:
- EP-A- 1 251 054
- EP-A- 1 854 690
- EP-A- 1 854 695

## Description

### BACKGROUND OF THE INVENTION

### Field of the invention

The present invention relates to railway vehicles having shock absorbing devices with shock absorbers applicable to railway vehicles such as railway cars, streetcars, monorail cars and new urban transportations.

### Description of the related art

Railway vehicles such as railway cars may possibly collide unexpectedly against objects during travel. In the past, for example, railway cars have collided with a large variety of large-size objects such as road vehicles, trees and other railway vehicles, and small-size objects such as rocks, snow chunks and parts of oncoming vehicles.

Now, we will consider a case where the railway vehicles collides against a large-sized object. When the railway vehicle collides against a large object, a large impact is applied to the railway car by the collision. One possible idea for protecting the crew and passengers on the railway car from this impact is to actively deform a portion of the structure of the railway car so as to absorb the energy of collision. According to this idea, the structure of the transport machine is divided into two separate portions, which are a space in which the crew and passengers are on board and which must not be crushed during collision with an object (hereinafter referred to as "survival zone"), and a space in which the structure of the transport machine is deformed actively so as to absorb the energy of collision during collision with an object (hereinafter referred to as "crushable zone").

Japanese patent application laid-open publication No. 2007-302081 (patent document 1) discloses a shock absorbing device of a railway vehicle in which a flying object protection plate is disposed at a leading end portion of a driver's cab arranged at the longitudinal end of a car body, such as in a leading car or in a rear car, and energy absorbing members are passed through windows formed on the flying object protection plate to be extended from the driver' s cab to beyond the flying object protection plate. The document discloses using the space of the driver' s cab in the car body to highly efficiently arrange energy absorbing members having high absorptive capacity. The direction of crushing of the shock absorbing device is aligned with the longitudinal direction of the car body, and the energy of collision is absorbed by the crushing of the energy absorbing members through repeated small-scale buckling. Further, the beam member of the crushable zone including the flying object protection plate can be designed solidly and connected to the survival zone.

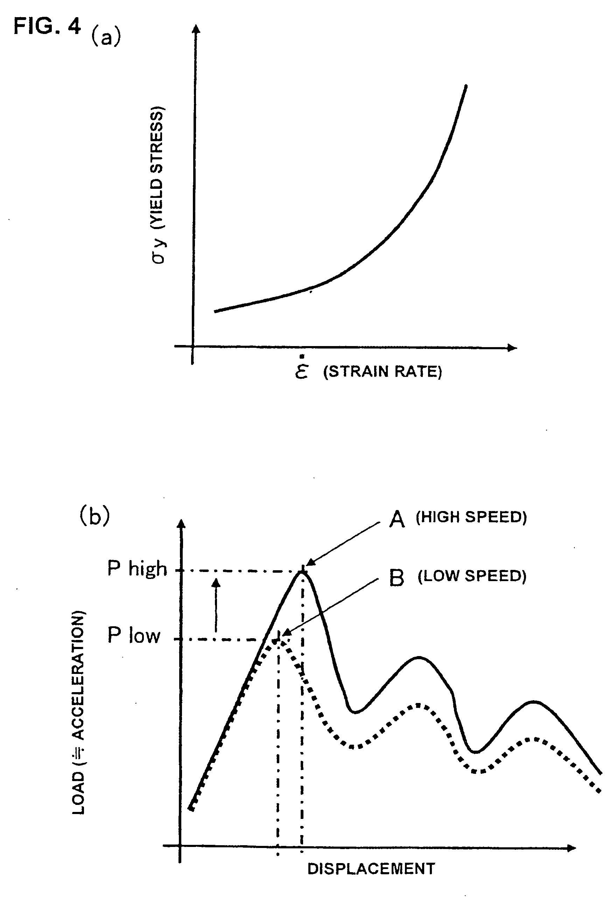

Shock absorbing devices have energy absorbing structures composed of pipe-like bodies formed of metal materials such as iron and aluminum or hybrid materials combining such metal materials, and the energy absorbing structures are arranged so that the axes of the pipe-like bodies are aligned in the longitudinal direction of the car body. The metal materials used in such energy absorbing structures have a property in that the strain depends on rate. That is, as shown in FIG. 4 (a), the value of yield stress σy varies greatly according to the strain rate dε/dt. The strain rate dependency refers to a property in that the value of the yield stress increases as the strain rate increases, so that when the strain rate is high, the material behaves as if rigidity has increased.

According to this property, when collision occurs at low speed, the shock absorbing device has small yield stress since the strain rate is small, and the peak load accompanying the crush is also small. In other words, the shock absorbing device starts crushing by a small displacement, and the maximum load (peak load; maximum acceleration for the passengers and crew) at that time is also small (refer to point B of FIG. 4(b)). However, when collision occurs at high speed, the deformation also becomes rapid, so that the strain rate becomes high and the yield stress also becomes high. At this time, even if the displacement becomes significant, crushing will not start until the stress reaches a high yield stress, and the peak load accompanying the crush also becomes significant, so that a large impact force (acceleration) acts on the passengers and crew (refer to point A of FIG. 4(b)). FIG. 4(b) illustrates a state in which the material experiences elastic deformation until the crushing starts, and when crushing starts, the load fluctuates and the displacement increases, and peak load occurs during such increase in displacement.

EP-A-1251054 illustrates a collision energy absorbing structure of a rail vehicle, having a tubular pipe member as energy absorbing member which absorbs energy by buckling in a bellows-like manner. To provide a trigger for starting deformation, and end portion of the pipe member is cut away at one side.

### SUMMARY OF THE INVENTION

As described, in shock absorbing devices, it is necessary to provide a trigger to start crushing of the energy absorber to promote the crushing of the energy absorber immediately after collision while the deformation of the energy absorbing member is within the elastic deformation rage, so as to reduce the peak load during collision.

The object of the present invention is to provide a shock absorbing device capable of reducing the peak load during collision and reducing the impact force (acceleration) that the passengers and crew experience, by starting and promoting the crushing of the energy absorbing members immediately after collision when the energy absorbing members receive compressive load and are elastically deformed.

In order to solve the problems mentioned above, the present invention provides a railway vehicle as set out in claim 1.

According to the railway vehicle having the above-described shock absorbing device, when the energy absorbers constituting the shock absorbing device receives compressive load and elastically deforms at the time of collision, the trigger mechanism is activated to start and promote crushing of the energy absorbers. The activation of the trigger mechanism triggers crushing of the energy absorbers, so as to further promote elastic deformation and prevent the peak load during collision from increasing.

Since the railway vehicle having the shock absorbing device according to the present invention is arranged as described above, the trigger mechanism is activated while the energy absorbers constituting the shock absorbing device experiences elastic deformation during collision, which triggers the starting of crushing of the energy absorbers. Therefore, the crushing of the energy absorbers are started and promoted while the load is still low, so that the peak load occurring during collision does not become high, and thus the impact reaching the passengers and crew can be relieved.

### BRIEF DESCRIPTION OF THE DRAWINGS

FIG. 1 is a view showing a frame format of a relative portion of the railway vehicle having the shock absorbing device according to the present invention;
FIG. 2 is a graph showing an example of the effect of reducing the peak load during collision according to the shock absorbing device of the present invention;
FIG. 3 is a perspective view showing a frame format of one example of a railway vehicle;
FIG. 4 is an explanatory view of the strain rate dependency;
FIG. 5 is a front view illustrating a first preferred embodiment of the railway vehicle having the collision energy absorbing device according to the present invention applied to a car end structure;
FIG. 6 is a side view of the car end structure illustrated in FIG. 5;
FIG. 7 is a horizontal cross-sectional view showing a portion of the collision energy absorbing device illustrated in FIG. 5;
FIG. 8 is a bottom cross-sectional view showing the front right half of the leading car according to the second embodiment of the railway vehicle of the present invention, which is a Y-Y cross-section of FIG. 9;
FIG. 9 is a vertical cross-sectional view illustrating a portion of the leading car shown in FIG. 8 in Z-Z cross-section;
FIG. 10 is a horizontal cross-sectional view illustrating a portion of the leading car shown in FIG. 8 in X-X cross-section;
FIG. 11 is a front view showing an example of the energy absorber;
FIG. 12 is a cross-sectional view showing one example of the state in which the energy absorber is crushed; and
FIG. 13 is a graph showing one example of the state of change of load of the collision energy absorbing device corresponding to the displacement of the collision energy absorbing device of the present invention when absorbing energy.

### DETAILED DESCRIPTION OF THE PREFERRED EMBODIMENTS

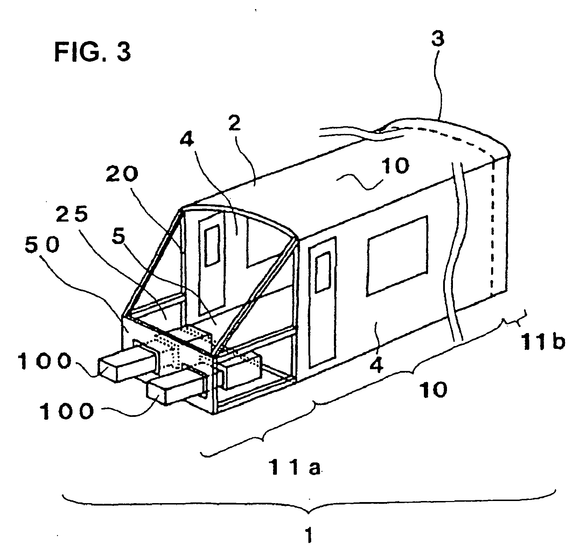

Now, the preferred embodiments of a railway vehicle having a shock absorbing device according to the present invention will be described with reference to the drawings. First, the arrangement of a railway car structure will be described with reference to FIG. 3. FIG. 3 is a perspective view illustrating an example of a railway car. The railway car structure 1 is composed of a roof structure 2 constituting the roof, end structures 3 defining the planes closing both longitudinal ends of the car body, side structures 4 forming left and right sides of the car body with respect to the longitudinal direction, and an underframe 5 defining the floor surface. The underframe 5 has a high rigidity with respect to the compressive load in the longitudinal direction. Openings corresponding to windows and doors are formed on the side structure 4. The railway car structure 1 having the above-described basic structure is composed of a survival zone 10 capable of protecting the lives of passengers and crew at the time of collision, and a crushable zone 11 (11a 11b) for absorbing the energy generated during collision. An opening 20 surrounded by the ends of the roof structure 2, the side structures 4 and the underframe 5 is formed on the end of the survival zone 10 adjacent to the crushable zone 11. Further, a driver' s cab 25 is arranged in the crushable zone 11 on which the crew such as a driver for driving the railway car is seated.

Crushable zones 11 are arranged at both longitudinal ends of the car, having the survival zone 10 longitudinally sandwiched therebetween. The illustrated arrangement takes a car having a driver's cab 25 as an example, but a car without the driver's cab 25 is also composed of crushable zones 11 and a survival zone relatively arranged in the same manner.

The crushable zone 11a has a flat plate-shaped flying object protection plate 50 having its in-plane orientation arranged orthogonally with respect to the traveling direction at the end of the driver's cab toward the traveling direction. Further, two energy absorbing members 100 and 100 are arranged to pass through the flying object protection plate 50 in the crushable zone 11a and separated from one another in a width direction of the car body.

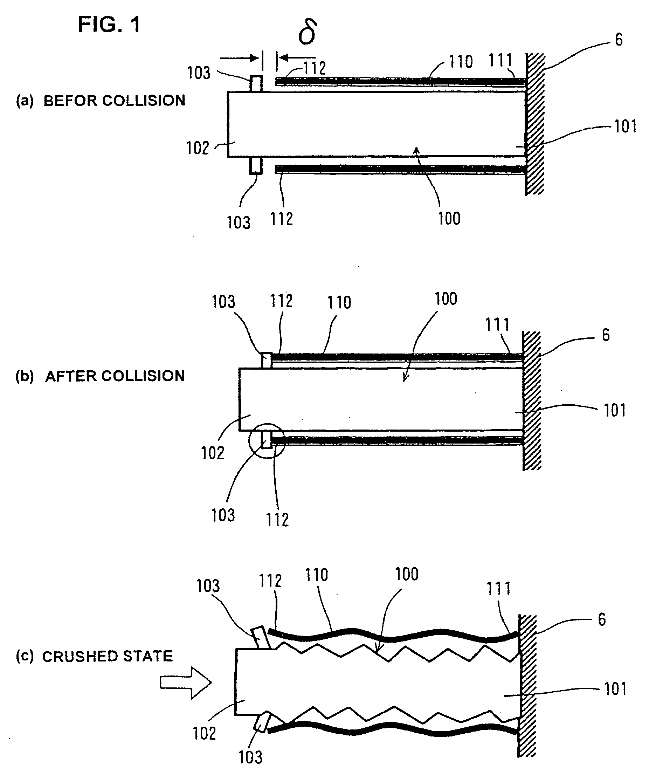

FIG. 1 is a view showing a frame format of a relevant portion of the railway vehicle having the shock absorbing device according to the present invention. FIG. 1(a) is a view showing the state prior to collision, FIG. 1(b) is a view showing the state of a moment after collision, and FIG. 1 (c) is a view showing the crushed state after the collision.

The energy absorbing member 100 constituting the shock absorbing device illustrated in FIG. 1 is a device to be attached to the end portion of the railway vehicle, and as shown in FIG. 3, the energy absorbing member can be attached not only to the leading end of the leading car and the rear end of the rear car but to the ends of intermediate cars in a train formation. A train formation is composed of front and rear leading cars and a required number of intermediate cars. For example, when the leading car (referring both to the front car and the rear car) collides against an obstacle or other cars, not only the leading car and the adjacent intermediate car but the ends of adjacently arranged intermediate cars sequentially collide against one another. By applying the collision energy absorbing device to the ends of the leading cars and the ends of the intermediate cars, it becomes possible to absorb the collision occurring anywhere in the train formation or the secondary collision occurring between the intermediate cars can be absorbed by the present collision energy absorbing device.

The energy absorbing member 100 has a long pipe-like structure as shown in the drawing, and preferably, arranged to have the longitudinal direction of the member correspond to the longitudinal direction of the car body and the base portion fixed to an end 6 of an underframe 5 (refer to FIG. 3) of each car, so that the energy absorbing member 100 is supported in a cantilever to the car body. The illustrated shock absorbing device is composed of a single energy absorbing member 100, but it is more preferable to arrange a plurality of energy absorbing members in the width direction of the car body as illustrated in FIG. 3 so as to relieve the collision by absorbing shock in a wide area and increasing the absorption energy quantity.

As shown in FIG. 1(a), the energy absorbing member 100 is a pipe-like member having a hollow space formed in the interior thereof (the details thereof will follow), and by attaching the base 101 to the end 6 of the underframe 5 of the car body, the energy absorbing member is fixed on the underframe 5 in a cantilever, that is, in a transverse state. Furthermore, in connection with the energy absorbing member 100, a pipe member 110 is arranged to surround the energy absorbing member 100 as a trigger member. The pipe member 110 is fixed in a cantilever at the base end 111 to the end 6 of the underframe 5, and has a shorter length than the energy absorbingmember 100. Therefore, a leading end 102 of the energy absorbing member 100 occupies the position protruded frontward than a leading end 112 of the pipe member 110 in the state prior to collision.

The energy absorbing member 100 has a projection 103 protruded in the radial direction at the leading end 102. The projection 103 can be a ring-shaped projection surrounding the post of the energy absorbing member 100, a fan-like projection that extends across a given area around the energy absorbing member 100, or a plurality of small projections that are protruded around the energy absorbing member 100. In the state prior to collision, a clearance δ is formed between the projection 103 and the leading end 112 of the pipe member 110.

As shown in FIG. 1(b), when the vehicle collides against an obstacle (when the intermediate car collides against the adjacent car), impact force acts on the leading end 102 of the energy absorbing member 100. The clearance δ is determined so that the projection 103 collides against the leading end 112 of the pipe member 110 when the collision speed is high and the energy absorbing member 100 deforms elastically due to collision. When the projection 103 collides against the pipe member 110, the crushing of the energy absorbing member 100 is triggered. The energy absorbing member 100 having received the trigger for crushing transits to a plastic deformation region and starts crushing, and the peak load occurring during such crushing is smaller than the peak load caused during crushing depending solely on the strain rate. The state in which the energy absorbing member 100 is being crushed is illustrated in FIG. 1 (c). In this state, the pipe member 110 is also subjected to plastic deformation to exert the energy absorbing function, but the collision energy is mainly absorbed by the crushing of the energy absorbing member 100.

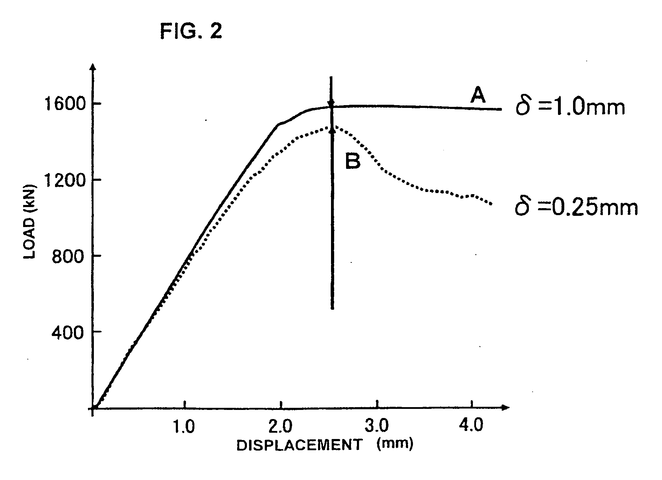

FIG. 2 illustrates an example of the effect of reducing the peak load during collision according to the shock absorbing device of the present invention. FIG. 2 is a graph showing the amount of displacement of the energy absorbing member 100 (amount of displacement of the leading end 102; mm units) on the horizontal axis and showing the load acting on the energy absorbing member 100 (kgN) on the vertical axis, illustrating an example of the displacement - load characteristics of the energy absorbing member. As for the clearance 5 between the projection 103 and the leading end 112 of the pipe member 110, the solid line denoted by reference A shows the case where the clearance is 1.0 mm, and the dotted line denoted by reference B shows the case where the clearance is 0.25 mm.

In the present example, while the clearance δ is absorbed and the trigger for crushing is activated so that the deformation accompanying the crush is progressed, the peak load occurs when the deformation quantity is 2.5 mm. The peak load is reduced by ΔP when the clearance δ is 0.25 mm than when the clearance is 1.0 mm. In other words, it can be recognized that the shock absorbing device can reduce the peak load occurring by the crushing thereof more effectively when crushed at an earlier stage. When the intensity of the collision is varied, a greater peak load occurs at a location where the deformation quantity is greater. Even in such example, the energy absorbing member 100 can be provided with a crush trigger in order to reduce the peak load.

The material of the projection 103 can be the same as that of the energy absorbing member 100, which is aluminum.

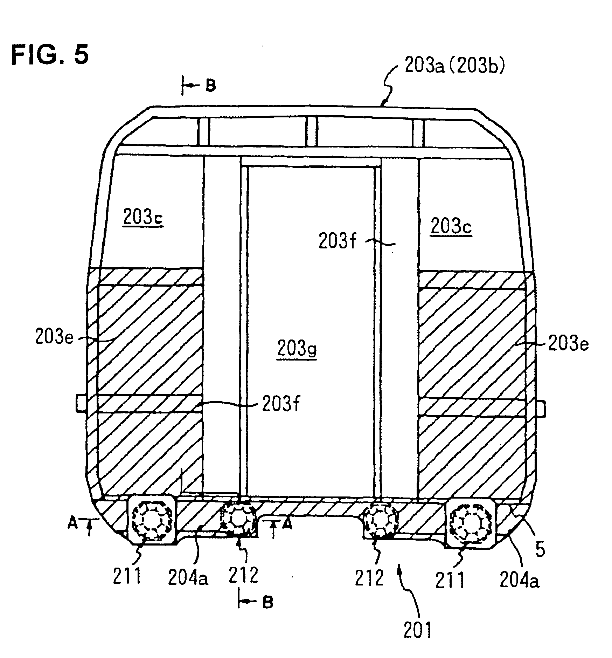

The embodiment shown in FIGS. 5 through 7 illustrates a collision energy absorbing device 201 attached to a car end structure 203a of the leading car facing the intermediate car and to a car end structure 203b positioned between intermediate cars. In a train formation, the car end structure (especially car end structure 203b) may have a driver's seat 203d provided in a space 203c disposed on both sides of a gangway 203g for moving from a car to another. In order to form a space 203c for the driver, a frame 203f is disposed surrounding the space 203c, and a flying obj ect blocking plate 203e (which is the portion with the hatching) for protecting the crew or the like from small rocks and other objects flying in toward the car body is provided on the front face thereof. The blocking plate 203e is formed by connecting left and right main panels at a lower side portion, and the lower side portion is provided with holes 203i, 203i, 203j and 203j through which the energy absorbing members 211, 211, 212 and 212 are penetrated. The car end structures 203a and 203b function similarly as the end structure. The car end structures 203a and 203b are attached to the end portion of the main car body via welding and other appropriate fixing means. When the car end structure 203a is observed from the inner side of the car body, the floor surface 203h constitutes a substantially flat and continuous plane with the floor surface 204b above the underframe 5.

In the present embodiment, the collision energy absorbing device attached to an end plate 204a of the underframe 5 of the car body includes large-size energy absorbers 211 and 211 disposed on both outer sides in the width direction of the car body and small-size energy absorbers 212 and 212 disposed close to the center in the width direction of the car body and distanced from one another. The energy absorbers 211 and 212 are arranged to extend longitudinally along the longitudinal direction of the car body. The leading ends of the energy absorbers 211 and 212 are disposed at the endmost side of the longitudinal direction of the whole car body. The base end side of the energy absorbers 211 and 212 is the side positioned closer to the longitudinal center of the car body. Moreover, the energy absorber 211 and the energy absorber 212 are aligned in a row in the direction intersecting with the longitudinal direction of the car body. In other words, the energy absorbers 211 and 212 are mutually substantially arranged in parallel in a row in the width direction of the car body. The energy absorbers 211 and 212 are actually positioned symmetrically with respect to the width direction of the car body, and the center of the absorbers is positioned at an equal height throughout the cars. The energy absorbers 211 and 212 have leading ends covered with end plates 211a and 212a, and end plates 211b and 212c attached to the base end side of the energy absorbers are fixed to the end plate 204a of the underframe 5 via fixtures 213 such as bolts and nuts, by which the energy absorbers are attached to the car body (underframe 5). The fixtures 213 can be other types of fastening means, or the fixing can be realized via welding. According to the present embodiment, the energy absorbers 211 and 212 are composed of large-size absorbers and small-size absorbers, but they can all be of the same size, or they can be large-size absorbers and small-size absorbers arranged oppositely in the inner and outer width-direction sides of the car body, or they can be of various other variety of designs.

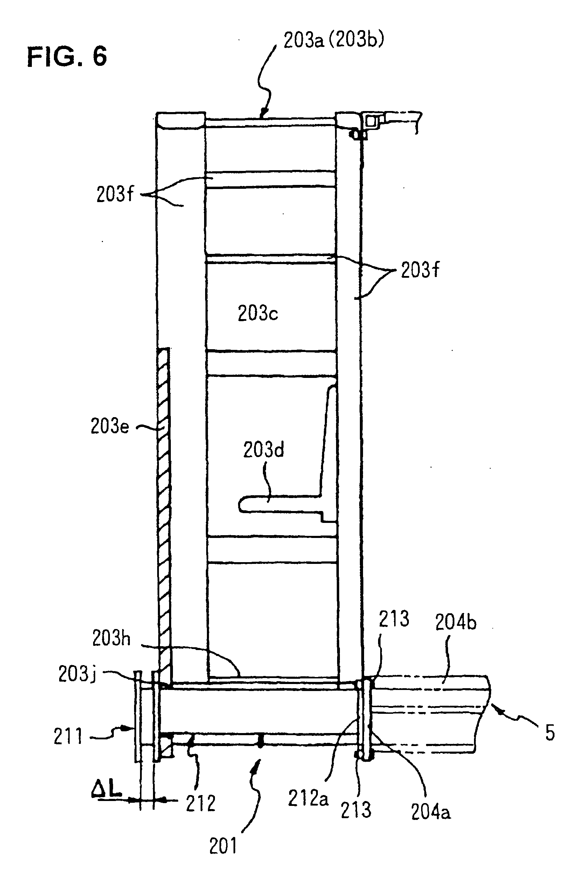

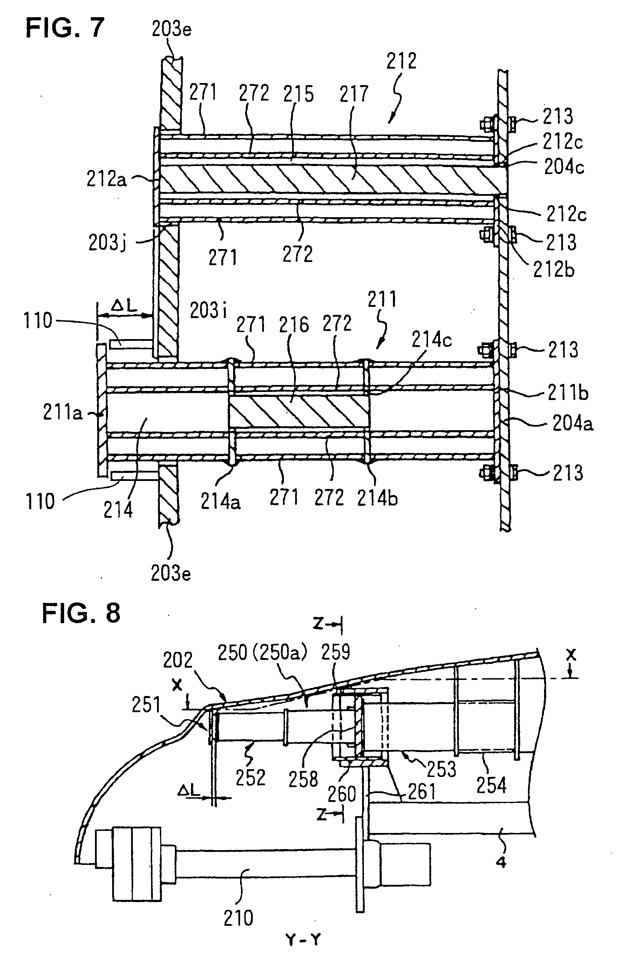

In the embodiment illustrated in FIG. 7, the large-size energy absorber 211 has a greater diameter and greater length than the small-size energy absorber 212. The small-size energy absorber 212 has a length determined so that the leading end of the energy absorber 212 occupies substantially the same position as the end of the car body (end face of the flying object blocking plate 203e) when attached to the end plate 204a of the underframe 5. On the other hand, the large-size energy absorber 211 is longer by length ΔL than the small-size energy absorber 212. The energy absorbers 211 and 212 attached to the end plate 204a of the underframe 5 are arranged so that they are overlapped in the state illustrated in FIG. 6 and aligned in a row in the state illustrated in FIG. 7. The large-size energy absorber 211 is somewhat (approximately 100 mm, for example) protruded from the end portion of the car body. Even when a large impact force is applied on the underframe 5 via collision, the firm underframe 5 can endure the load as described earlier. As described, the leading ends of the plurality of energy absorbers in the crushing direction are arranged at various positions in the longitudinal direction of the railway vehicle, though it is not necessary to vary the positions of all the leading end portions.

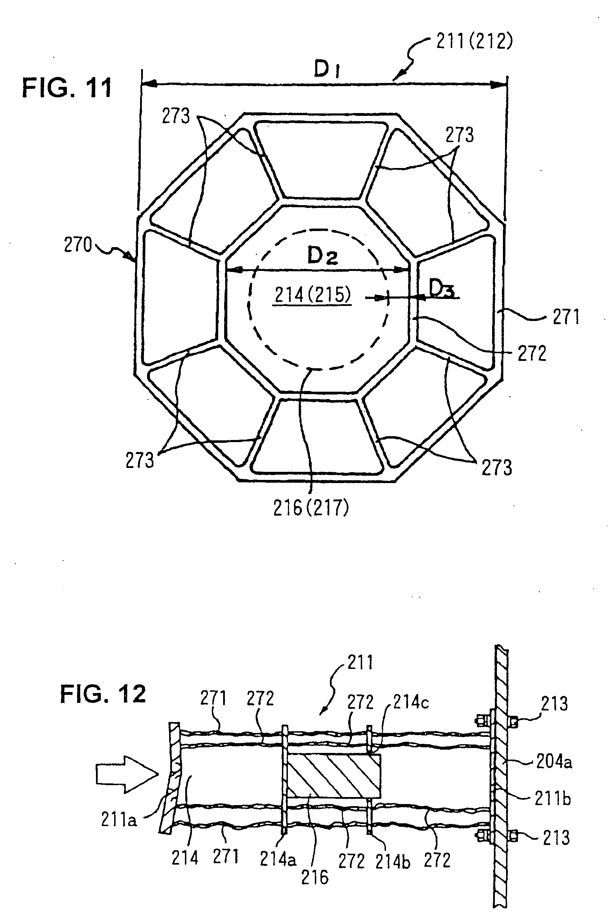

Thus, if collision energy absorbing devices are disposed at opposing positions of car end structures 203a and 203b in adjacent cars, the impact of collision reaching the cars will activate both collision energy absorbing devices. Since there is a difference in position (ΔL) of the leading ends of the energy absorbers 211 and 212 attached to the cars, the large-size energy absorbers 211 and 211 attached to adjacent cars will collide against each other first, and start crushing. Thereafter, with a slight time difference, the small-size energy absorbers 212 and 212 will collide against each other, and start crushing at a slightly delayed timing. The crushing of the energy absorbers 211 and 212 will now be described. For example, the actual example of crushing of the energy absorber 211 illustrated in FIG. 7 is illustrated in FIG. 12 (which illustrates an example having a buckling prevention member described hereafter built therein, but now, it is referred to as an example of how crushing occurs). The position of the vehicle when collision occurs is not strictly the same depending for example on whether the railway track is straight or curved, but when collision occurs to adjacent cars, the collision is considered to occur in the direction substantially corresponding to the longitudinal direction of the car. In such case, the energy absorbers 211 and 212 are crushed in such a state that minute buckling occurs repeatedly to the pipe-like bodies constituting the absorbers 211 and 212, so that the absorbers are crushed substantially in a straight directionmaintaining their axis lines. The shape of the crushed absorbers is, for example, a shrunk accordion-like structure. In other words, the energy absorbers 211 and 212 will deform in an accordion-like structure instead of deforming in a V-shape buckling in which the whole length of the absorber is folded in two, and therefore, the energy absorbers can absorb sufficient collision energy.

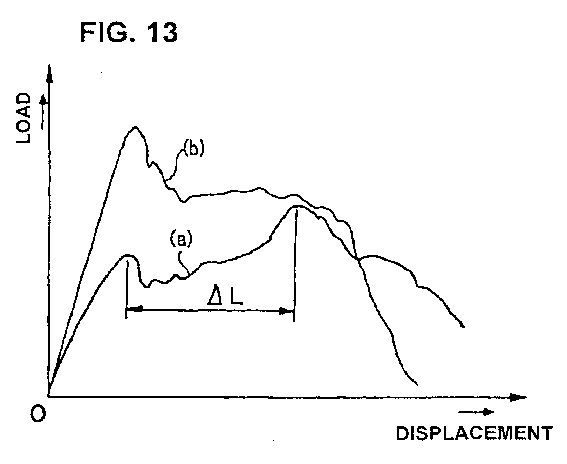

Since there is a slight difference in the timing in which the energy absorbers 211 and 212 start crushing, the peak load is dispersed and the crush peak load of the collision energy absorbing device is reduced, and therefore, the load applied to the main body of the car, the passengers and so on will be reduced. FIG. 13 is a graph illustrating one example of how the peak load is dispersed. As shown in FIG. 13, according to the prior art arrangement of energy absorbers, even when there are multiple energy absorbers, the crushing of the absorbers is started simultaneously since the leading ends thereof are aligned, and as a result, extremely high peak load is applied at the start of crushing (refer to graph b). On the other hand, the present embodiment realizes a varied crushing start timing due to the difference ΔL in the positions of the leading ends of the energy absorbers 211 and 212 created by the difference in lengths thereof, according to which the timings at which the peak load occurs are varied. As a result, after the load of the energy absorber 211 having been activated first experiences a peak, the load is temporarily reduced, and thereafter, the load of the energy absorber 212 activated thereafter experiences a peak. The present embodiment enables to suppress the overall height of the peak load compared to the example where multiple energy absorbers 211 and 212 are activated simultaneously (refer to graph a).

According to the illustrated example, the energy absorbers 211 and 212 have different cross-sectional sizes but have similar internal structures. We will describe the energy absorber 211 (212) constituting one type of collision energy absorbing device with reference to FIG. 11. Each energy absorber 211 (212) is composed of a hollow structure 270 having an octagonal cross-section, which is formed for example of an extruded aluminum alloy member. The cross-section thereof includes an octagonal outer wall 271, an octagonal inner wall 272 having a similar shape as the outer wall 271, and a plurality of radial direction walls 273 connecting the vertex points of the inner and outer octagonal walls 271 and 272. An inner space having an octagonal cross-sectional shape is formed within the inner wall 272, and inner spaces having trapezoidal cross-sectional shapes separated by radial direction walls 273 are aligned annularly between the outer wall 271 and the inner wall 272. The octagonal inner space of each energy absorber 211 (212) constitutes space 214 (215), which is a space capable of having a buckling prevention member 216 (217) inserted thereto. Further, in the example illustrated in FIG. 11, the energy absorber 211 (212) is a hollow structure 270 with an octagonal cross-section, but the cross-sectional shape thereof is not restricted thereto, and the energy absorber can have other appropriate hollow cross-sectional shapes such as a square pipe shape or a cylindrical shape, wherein the inner and outer walls thereof are connected via multiple ribs constituting a truss structure, for example. The outer diameter D1 of the energy absorber 211 (212) is 180 mm to 210 mm, and the inner diameter D2 of the inner wall 272 is approximately 120 mm.

As shown in FIG. 7, buckling prevention members 216 and 217 are respectively inserted to the octagonal inner spaces 214 and 215 of the energy absorbers 211 and 212. (Here, the buckling prevention members are for preventing the buckling of the entirety of the energy absorber, and should be referred to as entirety buckling prevention members, but for convenience, they are simply referred to as buckling prevention members.) The buckling prevention members 216 and 217 restrict the deformation of the energy absorbers 211 and 212 so that they are crushed and deformed in an accordion-like shape in the axial direction. In other words, by inserting the buckling prevention members 216 and 217 into the energy absorbers 211 and 212, the energy absorbers 211 and 212 are prevented from being bent largely at the center portion at the start of deformation, and thus, they are prevented from losing their function as energy absorbers due to entirety buckling.

The buckling prevention members 216 and 217 are aluminum alloy cylinders, and the lengths thereof can be determined arbitrarily. It is possible to form the buckling prevention members using materials such as fiber reinforced plastic (FRP) instead of aluminum alloy. In other words, the buckling prevention members 216 and 217 have somewhat higher flexural rigidity than the energy absorbers 211 and 212, but they do not necessarily have flexural rigidity equivalent to iron and other metal products, and should have sufficient flexural rigidity capable of restricting the energy absorbers 211 and 212 to crush in an accordion-like shape. Further, the buckling prevention members 216 and 217 can be a hollow pipe-like body or a solid body, as long as they have sufficient rigidity. Furthermore, the length of the buckling prevention member 216 disposed in the energy absorber 211 shown in FIG. 7 is set shorter than the length of the buckling prevention member 217 (longer than the length of the energy absorber 212) disposed in the energy absorber 212, but the lengths thereof are not restricted to such example and can be determined arbitrarily.

The energy absorber 211 illustrated in FIG. 7 has the buckling prevention member 216 arranged at the center thereof in the length direction. If the length of the energy absorber 211 is to be extended, joint plates 214a and 214b can be joined via fillet welding or other means (separating the energy absorber 211 into multiple parts via joint plates 214a and 214b). The buckling prevention member 216 disposed in the energy absorber 211 is fixed either to the joint plate 214a at the leading end side or to the joint plate 214b at the base end side, and on the other one of the joint plates 214a and 214b is provided a hole 214c through which the buckling prevention member 216 can be inserted. The buckling prevention member 216 is disposed between the inner wall portion 272 and the hole 214c with an appropriate clearance therebetween, wherein when the energy absorber 211 is compressed, the buckling prevention member 216 moves in the axial direction with respect to the energy absorber 211, allowing the energy absorber 211 to deform in an accordion-like shape. Further, the clearance between the buckling prevention member 216 and the inner wall 272 ensures a distance so as not to interfere with the inner wall 272 when it deforms inwardly in an accordion-like shape. That is, as shown in FIG. 11, a clearance of approximately 15 mm shown as dimension D3 is provided between the buckling prevention member 216 (217) and the inner wall 272, so that a total allowance of 30 mm is formed on the sides thereof. The end having the joint plate 214b of the buckling prevention member 216 can be inserted to the hole 214c of the joint plate 214b. As described, if the end of the buckling prevention member 216 is inserted to the hole 214c of the joint plate 214b, the hole 214c functions as a guide for the buckling prevention member 216, enabling the buckling prevention member 216 to move smoothly in the longitudinal direction of the car body. In this arrangement, as shown in FIG. 12, when an impact caused by collision operates on the energy absorber 211, the energy absorber 211 starts to deform via buckling. When the energy absorber 211tries to bend at the longitudinal center portion thereof into the form of a V-shaped entirety buckling, the buckling prevention member 216 prevents such deformation and enables the entirety of the energy absorber 211 to be deformed in an accordion-like manner. Further, FIG. 12 illustrates the state of crushing, and a trigger structure for accelerating the crushing is omitted from the drawing. Of course, a shock absorbing device including the buckling prevention member 216 can also include a trigger structure as illustrated in FIG. 1 composed of projections and a pipe-like body.

In FIG. 7, a single buckling prevention member 217 is inserted to the inner space 215 of the energy absorber 212, which is fixed via welding to the end plate 212a. The rear end of the buckling prevention member 217 is passed through a hole 204c formed on the end plate 204a of the underframe. According to this arrangement, when the energy absorber 212 receives impact and starts buckling, the buckling prevention member 217 moves in the axial direction with respect to the energy absorber 212, preventing the entirety buckling of the energy absorber 212 and realizing accordion-like crushing.

The hole 204c on the end plate 204a of the underframe functions as a guide for the buckling prevention member 217 similar to the hole 214c of the joint plate 214b, and realizes a smooth accordion-like deformation of the energy absorber 212. Further, the clearance between the inner wall 272 of the energy absorber 212 and the buckling prevention member 217 should preferably ensure a distance allowing accordion-like deformation of the inner wall 272. As described, though the buckling prevention member 217 does not contribute directly to absorbing energy, it functions to deform the energy absorber 212 into an accordion-like shape.

In the embodiment illustrated in FIG. 7, the flying object blocking plate 203e is formed so that the trigger members 110 and 110 are protruded toward the end plate 211a of the energy absorber 211. The details of the trigger member 110 are as described with respect to FIG. 1. The circumferential portion of the end plate 211a functions as the projection. By providing a trigger member 110 in the embodiment of FIG. 7, it becomes possible to accelerate the start of crushing so as to prevent the peak value of the rate-dependent impact load from increasing. Further, by appropriately determining distance ΔL, the flying object blocking plate 203e itself can function as the trigger member 110.

Next, with reference to FIGS. 8 through 10, the collision energy absorbing device according to the present invention and the leading car of the railway vehicle to which the energy absorbing device is applied are illustrated as the second embodiment of the present invention.

A leading end portion 202 of the leading car has a curved surface projected frontward. Collision energy absorbing devices are disposed at the rear end of the leading car and at the front end of the intermediate car, respectively, and a collision energy absorbing device 250 is disposed at the leading end portion 202 for absorbing a portion of the collision energy occurring when collision occurs between the leading end and an obstacle or the like. On the farthest end of the leading end portion 202 of the leading car is disposed a coupler 210.

As shown in FIGS. 8 through 10, collision energy absorbing devices 250 (250a) are attached to the leading car in a given region of the leading portion 202 in the length direction of the car body and distanced from each other in the width direction of the car body. Actually, two collision energy absorbing devices 250a and 250b having the same structure are arranged symmetrically at left and right sides in the width direction of the car body. In the illustrated example, only one side is illustrated and the other side is not shown. Each of the collision energy absorbing devices 250a and 250b disposed on the left and right sides of the car has a two-level (upper and lower) structure. Each of the upper and lower levels has a first energy absorber 251 and a second energy absorber 252placed on the leading end side thereof for absorbing the collision energy by crushing during collision. Similar to the first embodiment, the first energy absorber 251 and the second energy absorber 252 are pipe-like structures having an octagonal hollow cross-section as illustrated in FIG. 11, and are arranged so that the axis line of the pipes are parallel to the longitudinal direction of the car body, which can also be referred to as the front-rear direction or traveling direction. Therefore, the collision energy absorbing devices 250a and 250b arranged at both sides of the car body have a total of four first and second energy absorbers 251 and 252 arranged at the leading end portion of the car body.

The first energy absorber 251 and the second energy absorber 252 arranged in two levels (upper and lower levels) are attached to a common support plate 258 at the endmost side of the crushing direction, that is, at the end toward the center in the longitudinal direction of the car body. The energy absorbers 251 and 252 are commonly connected to a single third energy absorber 253 disposed at the rear end portion (end toward the center in the longitudinal direction of the car body) of the support plate 258. The third energy absorber 253 is connected to the underframe 5 via a structure frame 254 of the car body at the rear side thereof (the end closer to the center in the longitudinal direction of the car body). The cross-sections of the first, second and third energy absorbers 251, 252 and 253 are designed so that the absorber disposed rearward (toward the center in the longitudinal direction of the car body) has a larger cross-sectional area.

The common support plate 258 is fixed to a guide pipe 259 having the surrounding sides formed substantially in the shape of a square pipe. The outer circumference surface 259a of the guide pipe 259 is fit in slidable manner to an inner side 260a of a guide pipe plate 260 attached to the car body. Thus, at the time of collision, at first, the first and second energy absorbers 251 and 252 are deformed and crushed to absorb given energy, and thereafter, the third energy absorber 253 starts to deform, by which the guide pipe 259 together with the common support plate 258 is moved toward the rear side of the car body being guided by the guide pipe plate 260. When collision energy is completely absorbed by the crushing of the first and second energy absorbers 251 and 252, the third energy absorber 253 will not deform. Since the first energy absorber 251 and the second energy absorber 252 are guided via the inner surface 260a of the guide pipe plate 260, they are not buckled at the center portion (corresponding to the position of the guide pipe plate 260), and they can exert the function of absorbing collision energy throughout their whole lengths. The guide pipe 259 and the guide pipe plate 260 constitute a slide guide in the present invention. The guide pipe plate 260 is placed at the front end of the underframe 5. The area rearward from the guide pipe plate 260 is the driver's seat. The front end of the driver's seat is covered by a flying object blocking plate 261. The guide pipe plate 260 can be described as a hole opening in the flying object blocking plate 261. The first, second and third energy absorbers 251, 252 and 253 are prevented from being buckled in a V-shape, so that their functions to absorb collision energy are maintained.

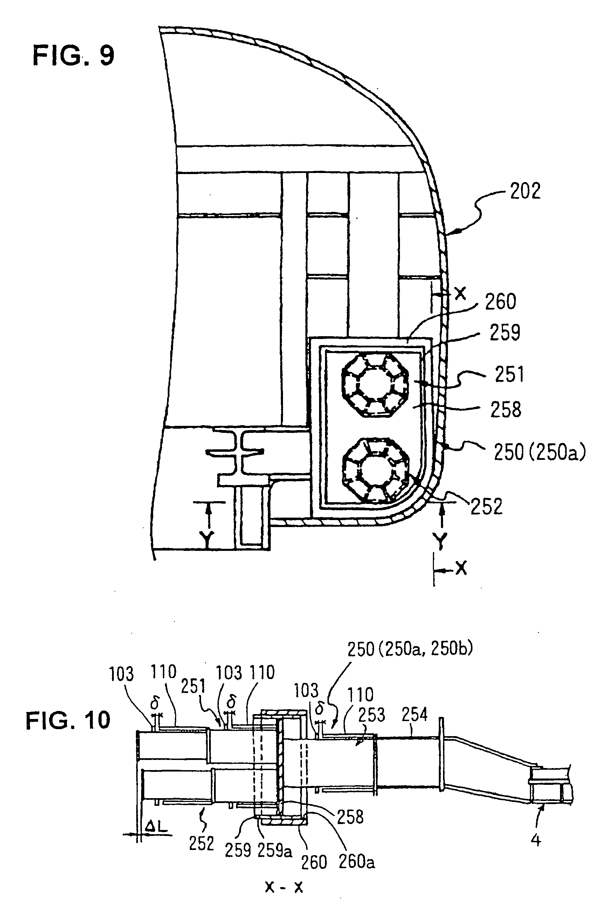

As illustrated in FIG. 10, the leading end positions of the first and second energy absorbers 251 and 252 in the direction of collision are varied, similar to the case of the collision energy absorbing device positioned at the end of the car body. That is, the lengths of the first and second energy absorbers 251 and 252 are slightly varied in the direction of collision, and in the state in which the absorbers are supported on a common support plate 258, the leading end position of the first energy absorber 251 is slightly positioned frontward by distance ΔL (approximately 100 mm, for example) than the leading end position of the second energy absorber 252. By this difference in the leading end positions (ΔL), when the leading end car experiences collision, the first energy absorber 251 starts crushing before the second energy absorber 252. By this slight difference in the timing in which the crushing starts, the peak load is dispersed, the crushing peak load of the energy absorbers 251 and 252 is reduced, and the load applied to the car body and the passengers can be reduced. Of course, the structures of the energy absorbers 251 through 254 can be designed to correspond to the structures of the energy absorbers illustrated in FIGS. 5 through 7.

In the embodiment of FIG. 10, when the car collides against an obstacle, impact force acts on the energy absorbers 251, 252 and 253. Each energy absorber 251 through 253 has projections 103 protruded in the lateral direction, and a slight clearance δ is formed between the projections 103 and pipe bodies 110 disposed on partition plates and support plates 258. The clearance δ is determined so that when the impact rate is high and the energy absorbers 251 through 253 are elastically deformed by collision, the projections 103 moves for the distance corresponding to the clearance and collides against the front end of the pipe bodies 110 functioning as trigger members. The collision of the projections 103 against the pipe bodies 110 triggers the crushing of the energy absorbing member 100. The energy absorbing member 100 having received the trigger for crushing transits to a plastic deformation range and starts crushing, wherein the peak load that occurs during the crushing is lower than the high peak load occurring in the case where the crushing depends solely on the strain rate. In the present embodiment, the pipe bodies 110 are designed to surround the whole circumference of the energy absorbers, but they can also be designed to be separated and arranged partially in the circumferential direction.

## Claims

1. A railway vehicle having a car body and a shock absorbing device with an energy absorber (100) for absorbing collision energy by crushing during collision, wherein
the shock absorbing device has a trigger mechanism for starting and promoting crushing of the energy absorber (100) when the energy absorber (100) receives compressive load and deforms elastically immediately after collision,
**characterized in that**
the trigger mechanism has a trigger member (110) arranged on the car body of the railway vehicle with a clearance with respect to the energy absorber (100) so that the trigger member (110) collides with a collision-side end portion (102) of the energy absorber (100) while the energy absorber (100) deforms elastically.

2. The railway vehicle having a shock absorbing device according to claim 1, wherein
the energy absorber (100) is a pipe-like body having a hollow inner structure;
the energy absorber (100) has on its collision-side end a projection (103) protruding outward from the pipe-like body; and
the trigger member is a pipe (110) arranged on the outer sideof the pipe-like body and having its end (112) distanced by said clearance from the projection (103).

3. The railway vehicle having a shock absorbing device according to claim 1 or 2, wherein
the energy absorber (251, 252) being displaced in a crushing direction during crushing thereof is guided by a slide guide (260) disposed on the vehicle body.

4. The railway vehicle having a shock absorbing device according to claim 1 or 2, wherein
the energy absorber (211, 212) is a pipe-like body having a longitudinally-extended space formed in the interior thereof; and
a buckling prevention member (216, 217) placed in the space for preventing an entirety buckling of the energy absorber (211, 212).

5. The railway vehicle having a shock absorbing device according to claim 1 or 2, wherein
the shock absorbing device is formed of a plurality of energy absorbers (211, 212);
the plurality of energy absorbers (211, 212) are arranged in a row in a direction intersecting the longitudinal direction of the railway vehicle;
each of the plurality of energy absorbers (211, 212) is aligned so that the crushing direction thereof corresponds to the longitudinal direction of the railway vehicle; and
leading ends in the crushing direction of the plurality of energy absorbers (211, 212) are placed at dispersed positions in the longitudinal direction of the railway vehicle.

6. The railway vehicle having a shock absorbing device according to any one of claims 3 to 5, wherein
the shock absorbing device is arranged at a leading car or a leading portion of a rear car or an end region of an intermediate car placed adjacent to another car in the railway vehicle so that the energy absorbers (211, 212, 251, 252) thereof are arranged with their axis lines corresponding to the longitudinal direction of the railway vehicle.

7. The railway vehicle having a shock absorbing device according to any one of claims 3 to 5, wherein
the car body of the railway vehicle is composed of a main car body and a car end structure (203a, 203b) disposed at a car end portion of the main car body;
the car end structure (203a, 203b) is attached in a removable manner to the car end portion of the main car body and can be crushed during collision; and
the energy absorber (211, 212) is arranged below a floor portion of the car end structure (203a, 203b).

## Patentansprüche

1. Eisenbahnfahrzeug mit einem Waggonkörper und einem Stoßabsorptionsgerät mit einer Energie-Absorptionseinrichtung (100) zum Absorbieren von Kollisionsenergie durch Eindrücken während einer Kollision, wobei
das Stoßabsorptionsgerät einen Auslösemechanismus zum Beginnen und Vorantreiben des Eindrückens der Energie-Absorptionseinrichtung (100) aufweist, wenn die Energieabsorptionseinrichtung (100) einer Druckbelastung ausgesetzt ist und sich unmittelbar nach der Kollision elastisch deformiert,
**gekennzeichnet dadurch, daß**
der Auslösemechanismus ein Auslöseelement (110) aufweist, das auf dem Waggonkörper des Eisenbahnfahrzeugs mit einem Zwischenraum bezüglich der Energie-Absorptionseinrichtung (100) angeordnet ist, so daß das Auslöseelement (110) mit einem Endabschnitt (102) der Energie-Absorptionseinrichtung (100) auf der Kollisionsseite kollidiert, während sich die Energie-Absorptionseinrichtung (100) elastisch deformiert.

2. Eisenbahnfahrzeug mit einem Stoßabsorptionsgerät nach Anspruch 1, wobei
die Energie-Absorptionseinrichtung (100) ein röhrenförmiger Körper mit einer hohlen inneren Struktur ist;
die Energie-Absorptionseinrichtung (100) an ihrem Ende auf der Kollisionsseite einen von dem röhrenförmigen Körper nach außen hervorspringenden Vorsprung (103) aufweist; und
das Auslöseelement eine auf der Außenseite des röhrenförmigen Körpers angeordnete Röhre (110) ist, deren Ende (112) durch den Zwischenraum vom Vorsprung (103) entfernt ist.

3. Eisenbahnfahrzeug mit einem Stoßabsorptionsgerät nach Anspruch 1 oder 2, wobei
die Energie-Absorptionseinrichtung (251, 252), die während des Eindrückens in einer Eindrückrichtung versetzt wird, durch eine auf dem Waggonkörper eingerichtete Leitführung (260) geführt wird.

4. Eisenbahnfahrzeug mit einem Stoßabsorptionsgerät nach Anspruch 1 oder 2, wobei
die Energie-Absorptionseinrichtung (211, 212) ein röhrenförmiger Körper ist, in dessen Innerem ein sich in Längsrichtung erstreckender Raum gebildet ist; und
ein Knickvermeidungselement (216, 217), das in dem Raum zum Vermeiden eines ganzheitlichen Knickens der Energie-Absorptionseinrichtung (211, 212) plaziert ist.

5. Eisenbahnfahrzeug mit einem Stoßabsorptionsgerät nach Anspruch 1 oder 2, wobei
das Stoßabsorptionsgerät aus mehreren Energie-Absorptionseinrichtungen (211, 212) gebildet ist;
die mehreren Energie-Absorptionseinrichtungen (211, 212) in einer Reihe in einer die Längsrichtung des Eisenbahnfahrzeugs schneidenden Richtung angeordnet sind;
jede der mehreren Energie-Absorptionseinrichtungen (211, 212) so ausgerichtet ist, daß ihre Eindrückrichtung der Längsrichtung des Eisenbahnfahrzeugs entspricht; und
Führungsenden in der Eindrückrichtung der mehreren Energie-Absorptionseinrichtungen (211, 212) an verteilten Stellen in der Längsrichtung des Eisenbahnfahrzeugs plaziert sind.

6. Eisenbahnfahrzeug mit einem Stoßabsorptionsgerät nach einem der Ansprüche 3 bis 5, wobei
das Stoßabsorptionsgerät an einem Führungswaggon oder einem Führungsabschnitt eines hinteren Waggons oder eines Endabschnitts eines Waggons dazwischen, der einem anderen Waggon im Eisenbahnfahrzeug benachbart ist, angeordnet ist, so daß die Energie-Absorptionseinrichtungen (211, 212, 251, 252) mit ihren Achsenlinien so angeordnet sind, daß diese der Längsrichtung des Eisenbahnfahrzeugs entsprechen.

7. Eisenbahnfahrzeug mit einem Stoßabsorptionsgerät nach einem der Ansprüche 3 bis 5, wobei
der Waggonkörper des Eisenbahnfahrzeugs aus einem Hauptwaggonkörper und einer an einem Waggonendabschnitt des Hauptwaggonkörpers angeordneten Waggonendstruktur (203a, 203b) zusammengesetzt ist;
die Waggonendstruktur (203a, 203b) in einer entfernbaren Weise am Waggonendabschnitt des Hauptwaggonkörpers angebracht ist und während der Kollision eingedrückt werden kann; und
die Energie-Absorptionseinrichtung (211, 212) unterhalb eines Bodenabschnitts der Waggonendstruktur (203a, 203b) angeordnet ist.

## Revendications

1. Véhicule ferroviaire ayant une caisse de voiture et un dispositif d'absorption de chocs muni d'un absorbeur d'énergie (100) pour absorber l'énergie de collision en s'affaissant pendant la collision, dans lequel :
le dispositif d'absorption de chocs a un mécanisme de déclenchement pour lancer et favoriser l'affaissement de l'absorbeur d'énergie (100) lorsque l'absorbeur d'énergie (100) reçoit une charge de compression et se déforme de manière élastique immédiatement après la collision,
**caractérisé en ce que**
le mécanisme de déclenchement a un élément de déclenchement (110) agencé sur la caisse de voiture du véhicule ferroviaire ayant un jeu par rapport à l'absorbeur d'énergie (100) de sorte que l'élément de déclenchement (110) entre en collision avec une partie d'extrémité du côté de la collision (102) de l'absorbeur d'énergie (100) alors que l'absorbeur d'énergie (100) se déforme de manière élastique.

2. Véhicule ferroviaire ayant un dispositif d'absorption de chocs selon la revendication 1, dans lequel
l'absorbeur d'énergie (100) est un corps de type conduit ayant une structure interne creuse,
l'absorbeur d'énergie (100) a sur son extrémité du côté collision une saillie (103) faisant saillie vers l'extérieur depuis le corps de type conduit, et
l'élément de déclenchement est un conduit (110) agencé sur le côté extérieur du corps de type conduit et ayant son extrémité (112) espacée de la saillie (103) par l'intermédiaire dudit jeu.

3. Véhicule ferroviaire ayant un dispositif d'absorption de choc selon la revendication 1 ou 2, dans lequel
l'absorbeur d'énergie (251, 252) étant déplacé dans une direction d'affaissement pendant l'affaissement de celui-ci est guidé par une coulisse de guidage (260) disposée sur le corps de véhicule.

4. Véhicule ferroviaire ayant un dispositif d'absorption de choc selon la revendication 1 ou 2, dans lequel
l'absorbeur d'énergie (211, 212) est un corps de type conduit ayant un espace étendu de manière longitudinale formé à l'intérieur de celui-ci, et
un élément de prévention du flambage (216, 217) disposé dans l'espace pour empêcher un flambage complet de l'absorbeur d'énergie (211, 212).

5. Véhicule ferroviaire ayant un dispositif d'absorption de choc selon la revendication 1 ou 2, dans lequel :
le dispositif d'absorption de chocs est formé d'une pluralité d'absorbeurs d'énergie (211, 212),
la pluralité d'absorbeurs d'énergie (211, 212) sont agencés en une rangée dans une direction qui coupe la direction longitudinale du véhicule ferroviaire,
chaque absorbeur parmi la pluralité d'absorbeurs d'énergie (211, 212) est aligné de sorte que la direction d'affaissement de ceux-ci correspond à la direction longitudinale du véhicule ferroviaire, et
des extrémités de tête dans la direction d'affaissement de la pluralité d'absorbeurs d'énergie (211, 212) sont placées à des positions dispersées dans la direction longitudinale du véhicule ferroviaire.

6. Véhicule ferroviaire ayant un dispositif d'absorption de choc selon l'une quelconque des revendications 3 à 5, dans lequel
le dispositif d'absorption de chocs est agencé dans une voiture de tête ou une partie de tête d'une voiture arrière ou une région d'extrémité d'une voiture intermédiaire placée à proximité adjacente d'une autre voiture dans le véhicule ferroviaire de sorte que leurs absorbeurs d'énergie (211, 212, 251, 252) sont agencés avec leurs lignes axiales correspondant à la direction longitudinale du véhicule ferroviaire.

7. Véhicule ferroviaire ayant un dispositif d'absorption de chocs selon l'une quelconque des revendications 3 à 5, dans lequel
la caisse de voiture du véhicule ferroviaire est constituée d'une caisse de voiture principale et d'une structure d'extrémité de voiture (203a, 203b) disposée à une partie d'extrémité de voiture de la caisse de voiture principale,
la structure d'extrémité de voiture (203a, 203b) est fixée d'une manière amovible à la partie d'extrémité de voiture de la caisse de voiture principale et peut s'affaisser pendant une collision, et
l'absorbeur d'énergie (211, 212) est agencé au-dessous d'une partie de plancher de la structure d'extrémité de voiture (203a, 203b).
